# EUROPEAN PATENT APPLICATION

(11) **EP 1 767 403 A1**
(43) Date of publication of application: **28.03.2007**
(21) Application number: 04747275.8
(22) Date of filing: 09.07.2004
(51) Int. Cl.: B60R 1/072

(54) **MIRROR SURFACE CONTROL ACTUATOR AND PROCESS FOR MANUFACTURING SAME**

(71) Applicant: Murakami Corporation, Shizuoka-shi Shizuoka 422-8569 (JP)
(72) Inventor: FUKAI, Akira MURAKAMI CORPORATION, Fujieda-shi, Shizuoka 4260053 (JP); YAMANA, Tohru MURAKAMI CORPORATION, Fujieda-shi, Shizuoka 4260053 (JP)
(74) Representative: Gill, Stephen Charles
(86) International application number: PCT/JP2004/009807
(87) International publication number: WO 2006/006214

(57) **Abstract**

A problem to be solved by the present invention is to provide a mirror surface adjustment actuator capable of easily being manufactured in a compact size in a reduced assembling time.

To solve the problem described above, the mirror surface adjustment actuator A includes a housing front member 10 for accommodating a dual axis motor 50 as a driving part, a worm gear 40 as an extending/contracting part, or the like; a mirror holder 30 on which a side mirror is fixed; and a housing rear member 20 for supporting the mirror holder 30 which is freely inclinable. The dual axis motor 50 includes a motor body 51, two rotary axes 52a, 52b, and three male terminals 53a, 53b, 53c.

## Description

### DISCLOSURE OF THE INVENTION

### PROBLEMS TO BE SOLVED BY THE INVENTION

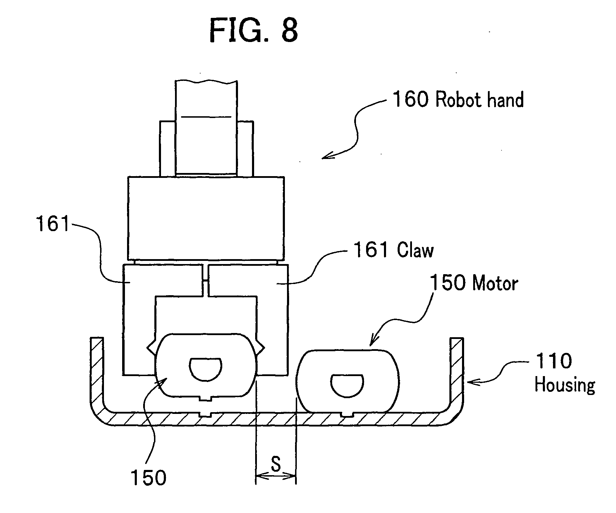

A mirror surface adjustment actuator is provided in a limited space, namely, inside a side mirror cover of an automobile, and is preferably downsized as far as possible. For this reason, when the two motors 150, 150 are mounted in the housing 110 of the mirror surface adjustment actuator, a space S (See FIG. 8) left between the two motors 150, 150 is required to be minimized.

However, when the motors 150, 150 are automatically mounted in the housing 110 of the mirror surface adjustment actuator using an assembly robot or the like, as shown in FIG. 8, a robot hand 160 of the assembly robot grasps and mounts only one of the motors 150, 150 at a time, then the other in turn. Therefore, the space S with the size of a claw 161 of the robot hand 160 is necessary, thereby creating a dead space, which disadvantageously makes the size of the mirror surface adjustment actuator larger.

Additionally, because the two motors 150, 150 are mounted in the housing 110 one by one, the operation of mounting the motor 150 has to be repeated twice. The number of operations is therefore increased, posing a problem in a reduction of the assembly time of the mirror surface adjustment actuator.

The present invention has been made to solve the problems described above, and an object of the present invention is to provide a mirror surface adjustment actuator capable of easily being manufactured in a compact size in a reduced assembling time.

### MEANS FOR SOLVING THE PROBLEMS

A mirror surface adjustment actuator according to Claim 1 includes a housing; a freely inclinable mirror holder provided in the housing; two extending/contracting parts interposed between the housing and the mirror holder; and a driving part provided in the housing for extending and contracting the two extending/contracting parts, and is characterized in that the driving part includes a dual axis motor in whose motor body there are two rotary axes.

With this configuration, the driving part of the mirror surface adjustment actuator includes the dual axis motor in whose motor body there are two rotary axes, so that, even when the mirror surface adjustment actuator is assembled using a robot hand, no dead space is created, unlike in the conventional mirror surface adjustment actuator. Further, the operation of mounting the motor using the robot hand is performed only once, without the need of repeating the same operation twice, which enables a reduction in the assembly time.

A mirror surface adjustment actuator according to Claim 2 is the mirror surface adjustment actuator described in Claim 1, and is characterized in that the dual axis motor has three terminals, and one of the three terminals is shared by the two rotary axes.

The term "shared by the two rotary axes" as used herein means that, though one rotary axis typically has two terminals, namely, a positive terminal and a negative terminal, in this case, the two terminals having the same pole of the two rotary axes (for example, a negative terminal of one rotary axis and that of the other) are short-circuited (connected together) to be shared by the two rotary axes.

With this configuration, the dual axis motor has three terminals, one of which is shared by the two rotary axes, so that the number of the harnesses for supplying power to the dual axis motor can be reduced. Thus, the mirror surface adjustment actuator can be further downsized. In the conventional actuator, the harnesses are connected to four terminals of the two motors, and then, two harnesses to be grounded are selected and short-circuited. However, such an operation is unnecessary in this configuration, which enables a reduction in the assembly time of the mirror surface adjustment actuator.

The invention according to Claim 3 is a method for manufacturing the mirror surface adjustment actuator described in Claim 1 or Claim 2, and includes a dual axis motor grasping step of grasping the dual axis motor with the robot hand; and a dual axis motor mounting step of mounting the dual axis motor in the housing with the robot hand.

With this configuration, after the dual axis motor is grasped with the robot hand, the dual axis motor is mounted in the housing with the robot hand, which creates no dead space between two motors like in the conventional mirror surface adjustment actuator, allowing the mirror surface adjustment actuator to be downsized. In addition, the dual axis motor as a driving part can be mounted in the housing in one operation, so that the assembly time of the mirror surface adjustment actuator can be reduced.

A mirror surface adjustment actuator according to Claim 4 includes a housing; a freely inclinable mirror holder provided in the housing; two extending/contracting parts interposed between the housing and the mirror holder; and a driving part provided in the housing for extending and contracting the two extending/contracting parts, and is characterized in that the driving part includes two single axis motors in each of whose motor body there is one rotary axis, and which are joined to each other.

With this configuration, the driving part of the mirror surface adjustment actuator includes the two single axis motors in each of whose motor body there is one rotary axis, and which are joined to each other, so that, even when the mirror surface adjustment actuator is assembled using the robot hand, no dead space is left, unlike in the conventional mirror surface adjustment actuator. In addition, because the two single axis motors are joined to each other, it is possible to grasp the two single motors at one time using the robot hand. Therefore, the operation of mounting the motors using the robot hand is performed only once (in one step), without the need of repeating the same operation twice, which enables a reduction in the assembly time.

It is preferable that each motor body of the two single axis motors has two flat surfaces parallel to each other, and the two motors are joined to each other with a flat surface of one motor in contact with a flat surface of the other (Claim 5). As described above, when the two single axis motors each having two flat surfaces are used, there are advantages that the motor bodies of the two motors can be easily joined to each other, and can be easily grasped with the robot hand.

The invention according to Claim 6 is a method for manufacturing the mirror surface adjustment actuator described in Claim 4 or Claim 5, and includes a single axis motors joining step of joining the two single axis motors together; a single axis motors grasping step of grasping the two single axis motors joined to each other in the single axis motors joining step, with the robot hand; and a single axis motors mounting step of mounting a couple of the joined single axis motors in the housing with the robot hand.

With this configuration, after the two single axis motors are joined to each other, the two joined single axis motors are grasped with the robot hand and mounted in the housing, creating no dead space between the two single axis motors, which enables the mirror surface adjustment actuator to be downsized. In addition, the robot hand needs not repeat the same operation twice, so that the assembly time of the mirror surface adjustment actuator can be reduced.

In the method for manufacturing the mirror surface adjustment actuator, it is preferable that the two single axis motors are joined to each other in the state where a flat surface of one motor is in contact with a flat surface of the other (the single axis motors joining step); the other two flat surfaces not in contact with each other of the two single axis motors, that have been joined to each other in the single axis motors joining step, are grasped with the robot hand (the single axis motors grasping step); and a couple of the joined single axis motors are mounted in the direction in which the flat surfaces are perpendicular to the housing (the single axis motors mounting step) (Claim 7). With this configuration, a projected area of the driving part in the housing becomes smaller, and flexibility in layout of the components provided in the housing is improved.

### EFFECT OF THE INVENTION

According to the present invention, there are provided a mirror surface adjustment actuator capable of easily being manufactured in a compact size in a reduced assembling time, and a method for manufacturing the same. Thus the mirror surface adjustment actuator can be mounted inside a side mirror cover which is smaller than the conventional one, and the mirror surface adjustment actuator can be manufactured more efficiently at a lower cost.

### BEST MODES FOR CARRYING OUT THE INVENTION

The best modes for carrying out the present invention are described in detail with reference to the drawings. In the description, the same reference numerals are assigned to the same components, and overlapping descriptions are omitted herefrom. In the drawings to be referred to, FIG. 1 is an exploded perspective view showing a mirror surface adjustment actuator according to a first embodiment; FIG. 2 is a cross sectional view showing a configuration of the mirror surface adjustment actuator according to the first embodiment; FIG. 3 is a perspective view showing a dual axis motor of the mirror surface adjustment actuator according to the first embodiment; FIG. 4 is a perspective view showing how the dual axis motor of the mirror surface adjustment actuator according to the first embodiment is mounted; FIG. 5 is a perspective view showing a configuration of a driving part of a mirror surface adjustment actuator according to a second embodiment; and FIG. 6 is a perspective view showing a configuration of a driving part of a mirror surface adjustment actuator according to other embodiment.

### (First Embodiment)

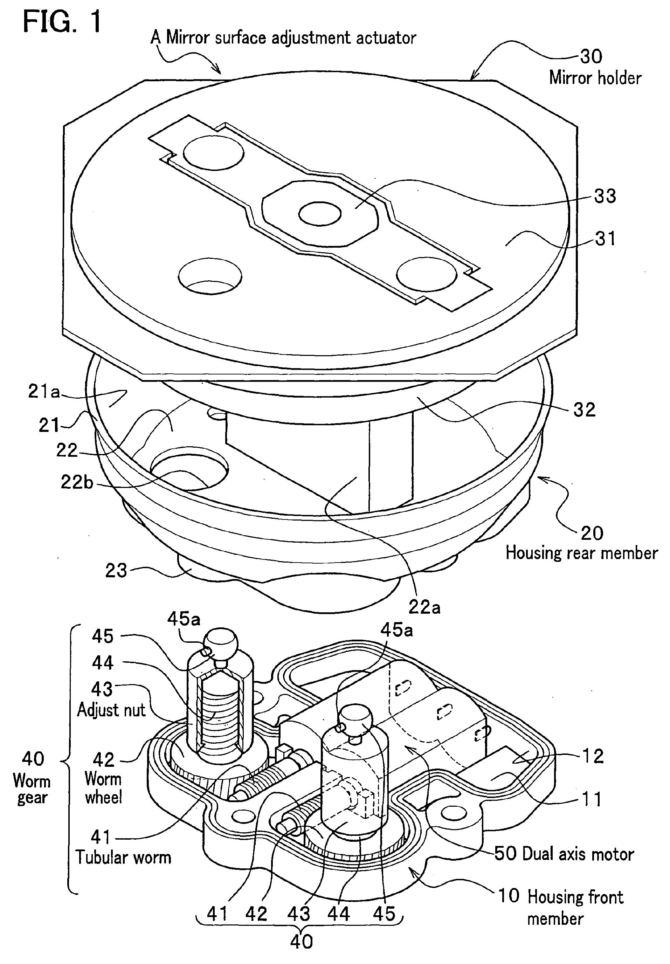

First, the configuration of the mirror surface adjustment actuator A according to a first embodiment is described with reference to FIG. 1 through FIG. 3.

### (Configuration of Mirror Surface Adjustment Actuator)

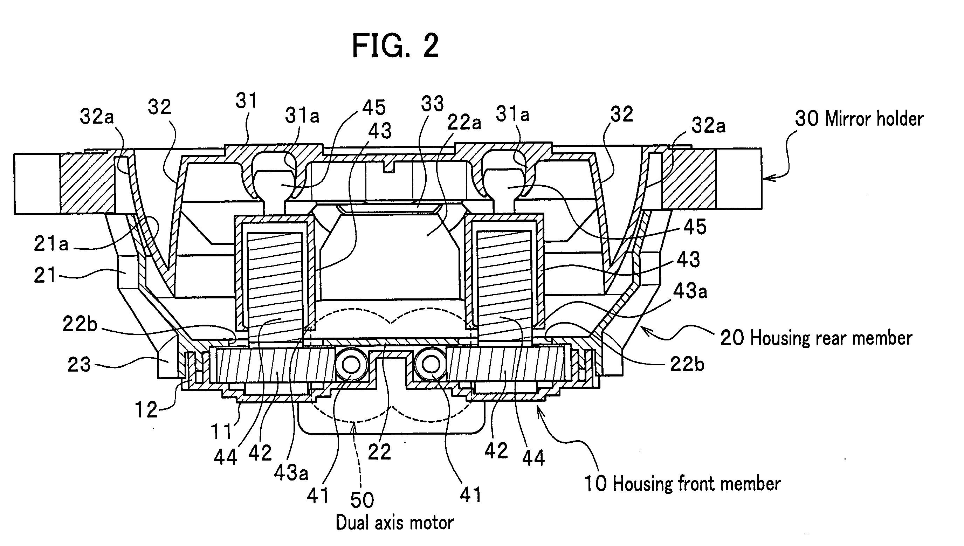

The mirror surface adjustment actuator A according to the first embodiment is a device for adjusting an angle of a side mirror of an automobile, and is accommodated inside a side mirror cover. The mirror surface adjustment actuator A includes, as shown in FIG. 1 and FIG. 2, a housing front member 10; a mirror holder 30 on which a side mirror (not shown) is fixed; a housing rear member 20 for supporting the mirror holder 30 which is freely inclinable; worm gears 40 each as an extending/contracting part; and a dual axis motor 50 as a driving part. The housing front member 10 with the housing rear member 20 corresponds to the housing described in Claims.

### (Housing Front Member 10)

The housing front member 10 is made of a synthetic resin material or the like, and includes, as shown in FIG. 1 and FIG. 2, a bottom wall 11, and a peripheral wall 12 surrounding the periphery of the bottom wall 11. The housing front member 10 has a space for mounting the dual axis motor 50 to be provided thereon, and a space for mounting two worm gears 40, 40 to be provided thereon.

### (Housing Rear Member 20)

The housing rear member 20 serves as a top cover for the housing front member 10, and also as a spherical socket for supporting the mirror holder 30 which is freely inclinable. The housing rear member 20 includes, as shown in FIG. 1 and FIG. 2, a tubular part 21, a circular bottom 22 for closing one end of the tubular part 21, and a cover 23 provided on the opposite side of the bottom 22 with respect to the tubular part 21. The tubular part 21 is formed to have a larger diameter as farther away from the bottom 22. A hollow part in the tubular part 21 fits in with a circular convex part 32 of the mirror holder 30 to be described hereinafter. A receiving part 22a for supporting the mirror holder 30 protrudes from the central portion of the bottom 22 on the side of the tubular part 21. The cover 23 has the same shape as the profile of the peripheral wall 12 of the housing front member 10 so that the cover 23 fits in with the peripheral wall 12. Further, two through holes 22b, 22b are provided in the positions corresponding to respective adjust nuts 43, 43 of the worm gears 40, 40 mounted in the housing front member 10. When the peripheral wall 12 of the housing front member 10 and the cover 23 of the housing rear member 20 are fitted in with each other, the two adjust nuts 43, 43 protrude from the respective through holes 22b, 22b.

### (Mirror Holder 30)

The mirror holder 30 mainly includes, as shown in FIG. 1 and FIG. 2, a plane part 31 on which a side mirror is mounted, and a circular convex part 32 to fit in with the tubular part 21 of the housing rear member 20. An outer surface 32a of the circular convex part 32 is formed to have a spherical surface, and slides in contact with an inner spherical surface 21a of the tubular part 21 of the housing rear member 20, serving as a so-called spherical socket. Further, a small spherical socket 33 is provided at the center of the plane part 31. The mirror holder 30 is attached via the spherical socket to the tip of the receiving part 22a protruding from the central portion of the bottom 22 of the housing rear member 20, using screws or the like. Engagement concave parts 31a, 31a are provided in the positions corresponding to the adjust nuts 43, 43 of the respective worm gears 40, 40 on a surface of the plane part 31 on the side of the housing rear member 20.

### (Worm Gear 40)

The two worm gears 40, 40 each serve as an extending/contracting part described in Claims, and include, as shown in FIG. 1 and FIG. 2, tubular worms 41, 41; worm wheels 42, 42; and adjust nuts 43, 43. The worm gears 40, 40 are mounted on the bottom wall 11 of the housing front member 10, and each of the tips thereof (engagement parts 45, 45) are attached to the mirror holder 30.

The tubular worms 41, 41 are fixed to rotary axes 52a, 52b (See FIG. 1 to FIG. 3) of the dual axis motor 50, and transmit torque of the dual axis motor 50 to the worm wheels 42, 42. Both male screws 44, 44 protrude from the central portion of the respective worm wheels 42, 42. Each of the adjust nuts 43, 43 is a tubular member with a lower end thereof opened, and, in respective openings, meshed hooks 43a, 43a to be in mesh with the male screws 44, 44 are provided.

Spherical engagement parts 45, 45 are provided on respective upper ends of the adjust nuts 43, 43, and are attached, as shown in FIG. 2, to the engagement concave parts 31a, 31a provided on the backside of the mirror holder 30 so that the engagement parts 45, 45 are inclinable but unrotatable. Specifically, protrusions 45a, 45a provided on respective engagement parts 45, 45 are caught into respective grooves (not shown) provided on the engagement concave parts 31a, 31a, which enables the engagement parts 45, 45 to be attached to the mirror holder 30 without being rotated.

According to this configuration, when the worm wheels 42, 42 are rotated, the meshed hooks 43a, 43a are in mesh with the male screws 44, 44 and move along respective screw grooves of the male screws 44, 44, and thereby the adjust nuts 43, 43 move up and down with respect to the worm wheels 42, 42. The worm gears 40, 40 thus serve each as the extending/contracting part.

### (Dual Axis Motor 50)

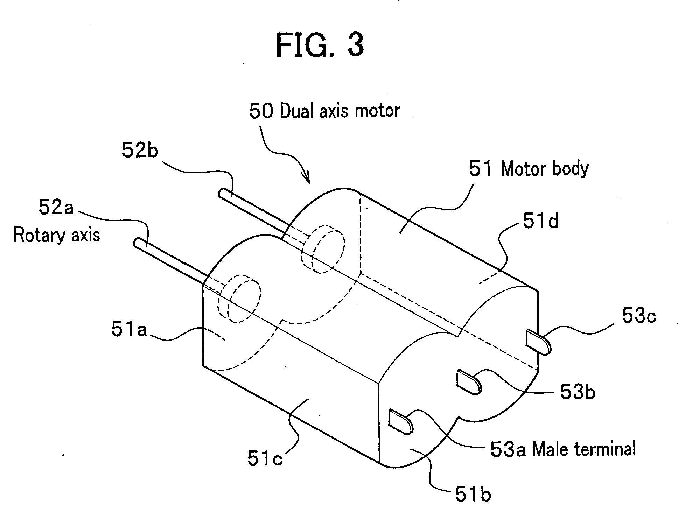

The dual axis motor 50 as a driving part is a member for rotating the worm gears 40, 40, and includes, as shown in FIG. 3, a motor body 51; two rotary axes 52a, 52b; and three male terminals 53a, 53b, 53c. The motor body 51 has two flat surfaces 51c, 51d, which are parallel to each other. The motor body 51 includes therein two rotary axes 52a, 52b, and a magnetic pole and a coil (both not shown) for rotating the rotary axes 52a, 52b. The two rotary axes 52a, 52b protrude from an end face 51a of the motor body 51, and are rotatably supported by the motor body 51. The three male terminals 53a, 53b, 53c protrude from the other end face 51b of the motor body 51.

Two male terminals 53a, 53c out of the three male terminals 53a, 53b, 53c are connected to the two rotary axes 52a, 52b respectively (more specifically, to a coil or a commutator for rotating the rotary axes 52a, 52b). In the meantime, the centrally-provided male terminal 53b is connected to both the two rotary axes 52a, 52b. Namely, the two rotary axes 52a, 52b use the same male terminal 53b as a terminal (a negative terminal) for a circuit in which electric currents pass for rotating the two rotary axes 52a, 52b. The number of the harnesses can be thereby reduced to three, instead of four required in the conventional actuator. It is to be noted that the other end of the harness, which is not connected to the male terminal 53b, is connected to the reference potential surface (the ground).

### (Method for Manufacturing Mirror Surface Adjustment Actuator A)

Next is described a method for manufacturing the mirror surface adjustment actuator A, in particular, the steps of mounting the dual axis motor 50 in the housing front member 10.

### (Dual Axis Motor Grasping Step)

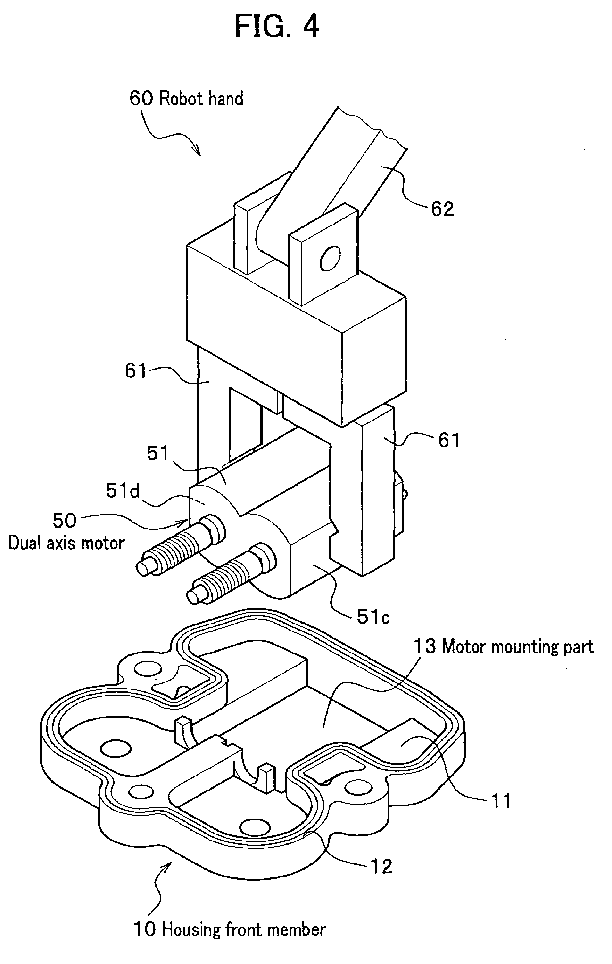

First, the dual axis motor 50 is grasped with the robot hand 60 as shown in FIG.4. In the first embodiment, the dual axis motor 50 is grasped in the state where claws 61, 61 of the robot hand 60 are applied to the flat surfaces 51c, 51d of the motor body 51 to be thereby sandwiched from both sides thereof.

### (Dual Axis Motor Mounting Step)

Next, an arm 62 of the robot hand 61 is operated to move the dual axis motor 50 to a motor mounting part 13 provided in the housing front member 10, in which the dual axis motor 50 is mounted.

As described above, since the dual axis motor 50 is used, it is not necessary to leave a space for the claw 61 of the robot hand 60 between the two motors, unlike in the conventional actuator. Thus no dead space is created therebetween, allowing the mirror surface adjustment actuator A to be downsized.

In the conventional method for manufacturing a mirror surface adjustment actuator, the same operation is repeated twice in such an order as; a 'motor grasping step', a 'motor mounting step', another 'motor grasping step', and another 'motor mounting step' . In the present method for manufacturing the mirror surface adjustment actuator A, however, the 'motor grasping step' and the 'motor mounting step' are each carried out only once, which enables a reduction in the assembly time.

### (Second Embodiment)

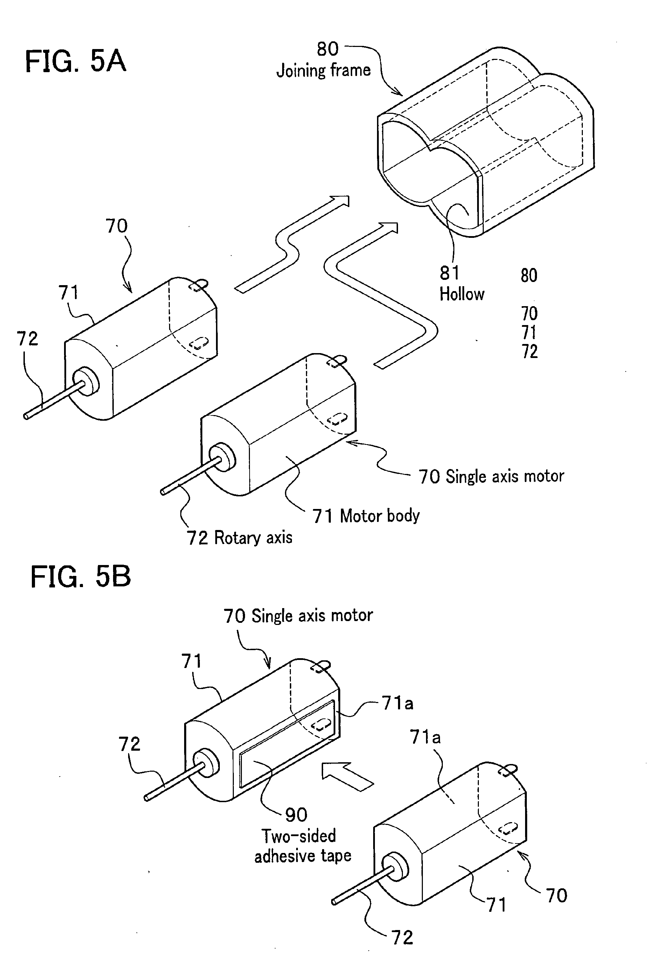

Next is described a mirror surface adjustment actuator according to a second embodiment with reference to FIG. 5. FIG. 5 is a perspective view showing a configuration of a driving part of the mirror surface adjustment actuator according to the second embodiment.

The mirror surface adjustment actuator according to the second embodiment has, as shown in FIG. 5, a different configuration from the mirror surface adjustment actuator according to the first embodiment, in the point that, in the second embodiment, the driving part for rotating worm gears 40, 40 (See FIG. 1) includes two single axis motors 70, 70 having respective single rotary axes 72, 72 in respective motor bodies 71, 71, and the two single axis motors 70, 70 are joined to each other.

The method of joining the two single axis motors 70, 70 is not specifically limited to the above embodiment.
For example, as shown in FIG. 5A, a joining frame 80 may be provided which has a shape that allows the two single axis motors 70, 70 to be fitted in with, so that the two single axis motors 70, 70 can fit in with a hollow portion 81 of the joining frame 80 to thereby join the two single axis motors to each other.
Further, as shown in FIG. 5B, a two-sided adhesive tape 90 may be applied onto a flat surface 71a of the motor body 71 of one single axis motor 70, and a flat surface 71a of the motor body of the other single axis motor 70 may be also applied onto the two-sided adhesive tape 90, so that the two single axis motors 70, 70 can be joined to each other.

After the two single axis motors 70, 70 are joined to each other using the method shown in FIG. 5A or FIG. 5B, (a single axis motors joining step), a couple of the joined single axis motors 70, 70 are grasped with the robot hand 60 (See FIG. 4) (a single axis motors grasping step), and are mounted on the motor mounting part 13 of the housing front member 10 (a single axis motors mounting step). It is to be noted that, as for the single axis motors grasping step and the single axis motors mounting step in this embodiment, description of the dual axis motor grasping step and the dual axis motor mounting step in the first embodiment is to be referred to, and the detailed description is omitted herefrom.

With the configuration described above, it is not necessary to leave a space large enough for the claw 61 of the robot hand 60 which is to be entered between the two motors, unlike in the conventional actuator. Thus no dead space is created therebetween, allowing the mirror surface adjustment actuator A to be downsized.
Further, the operation of mounting the two single axis motors 70, 70 in the housing front member 10 is performed only once, which enables the time necessary for the operation to be reduced.

In the second embodiment, two general-purpose single axis motors 70, 70 are used, and each single axis motor is shaped as a cylindrical column whose two end parts are parallely cut-out in a longitudinal direction to make two flat surfaces. Thus, it is not necessary to use a special type motor as in the conventional actuator, allowing a reduction in the cost of materials.

The best modes for carrying out the present invention are described above with reference to the drawings. However, the present invention is not limited to these embodiments, and various design changes can be made without departing from the gist of the present invention.

In the embodiments described above, for example, the housing front member 10 and the housing rear member 20 as shown in FIG. 1 and FIG. 2 are employed, but the present invention is not limited to this configuration, and the present invention can be applied to any configuration as long as the angle of the mirror is adjustable.

The driving part of the embodiments described above is not limited to those shown in FIG. 3 and FIG. 5, and the present invention can be applied to any configuration as long as a motor body has two rotary axes, or two motor bodies each having a single rotary axis are joined to each other.

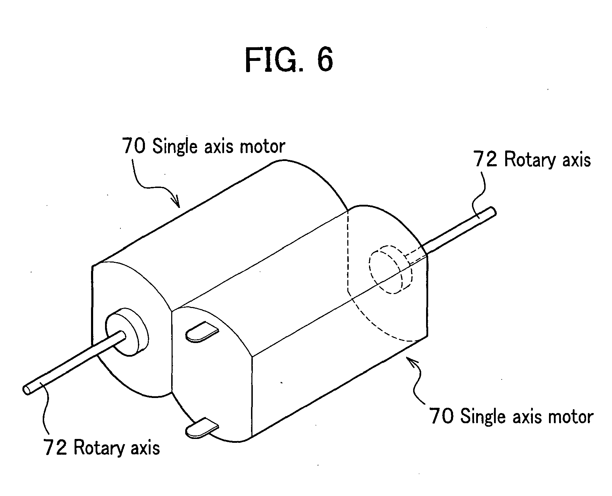

Depending on the layout of the worm gears 40, 40, for example, the two single axis motors 70, 70 may be joined to each other in the state where the rotary axes 72, 72 face the opposite direction to each other as shown in FIG. 6. Further, the dual axis motor having a single motor body and two rotary axes can be configured such that one rotary axis protrudes from one face of the single motor body, and the other rotary axis protrudes from the other face thereof. With this configuration, it is possible to downsize the housing in response to various layouts of the components of the mirror surface adjustment actuator.

In the first embodiment, the number of the male terminals 50 for connecting the harnesses is three, but the present invention is not limited to this configuration, and the present invention can be applied to the configuration in which the number of the male terminals 53 is four. The shape of the terminals is not limited to the male terminals, but can be female terminals.

In the first embodiment, the worm gear 40 serves as the extending/contracting part, but the present invention is not limited to this configuration, and the present invention can be applied to any configuration in which a component serving as the extending/contracting part operates with rotation of a motor and can tilt the mirror holder 30.

### INDUSTRIAL APPLICABILITY

According to the present invention, there are provided a mirror surface adjustment actuator capable of easily being manufactured in a compact size in a reduced assembling time, and the method for manufacturing the same. Therefore, such a mirror surface adjustment actuator can be mounted inside a side mirror cover which is smaller than the conventional one, and the mirror surface adjustment actuator can be manufactured more efficiently at a lower cost.

### BRIEF DESCRIPTION OF THE DRAWINGS

FIG. 1 is an exploded perspective view showing a mirror surface adjustment actuator according to the first embodiment.
FIG. 2 is a cross sectional view showing a configuration of the mirror surface adjustment actuator according to the first embodiment.
FIG. 3 is a perspective view showing a dual axis motor of the mirror surface adjustment actuator according to the first embodiment.
FIG. 4 is a perspective view showing how the dual axis motor of the mirror surface adjustment actuator according to the first embodiment is mounted.
FIG. 5 is a perspective view showing a configuration of a driving part of a mirror surface adjustment actuator according to the second embodiment.
FIG. 6 is a perspective view showing a configuration of a driving part of a mirror surface adjustment actuator according to other embodiment.

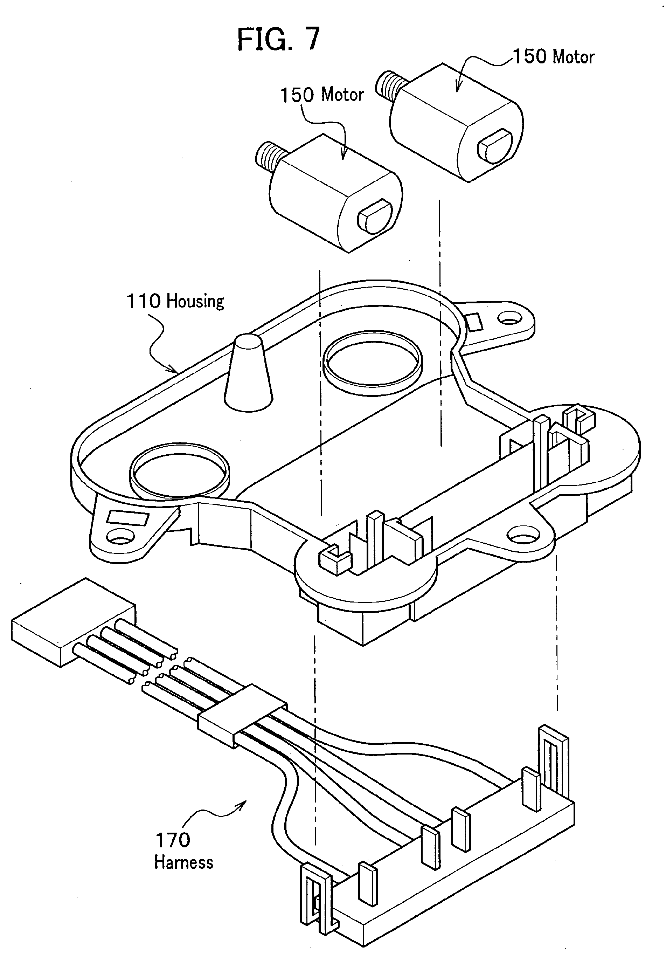

FIG. 7 is an exploded perspective view showing a configuration of a conventional mirror surface adjustment actuator.
FIG. 8 is an explanatory view showing how the conventional mirror surface adjustment actuator is mounted.

### DESCRIPTION OF REFERENCE CHARACTERS

- 10: Housing front member (Housing)
- 20: Housing rear member (Housing)
- 30: Mirror holder (Mirror supporting part)
- 40: Worm gear (Extending/contracting part)
- 50: Dual axis motor (Driving part)
- 51: Motor body
- 52a, 52b: Rotary axis
- 70: Single axis motor (Driving part)
- 71: Motor body
- 72: Rotary axis
- 80: Joining frame
- A: Mirror surface adjustment actuator

## Claims

1. A mirror surface adjustment actuator comprising:
a housing;
a freely inclinable mirror holder provided in the housing;
two extending/contracting parts interposed between the housing and the mirror holder; and
a driving part provided in the housing for extending and contracting the two extending/contracting parts,
wherein the driving part comprises a dual axis motor in whose motor body there are two rotary axes.

2. The mirror surface adjustment actuator according to Claim 1,
wherein the dual axis motor has three terminals; and
one of the three terminals is shared by the two rotary axes.

3. A method for manufacturing the mirror surface adjustment actuator according to Claim 1 or Claim 2 comprising:
a dual axis motor grasping step of grasping the dual axis motor with a robot hand; and
a dual axis motor mounting step of mounting the dual axis motor in the housing, with the robot hand.

4. A mirror surface adjustment actuator comprising:
a housing;
a freely inclinable mirror holder provided in the housing;
two extending/contracting parts interposed between the housing and the mirror holder; and
a driving part provided in the housing for extending and contracting the two extending/contracting parts,
wherein the driving part comprises two single axis motors in each of whose motor body there is one rotary axis, and which are joined to each other.

5. The mirror surface adjustment actuator according to Claim 4,
wherein each motor body of the two single axis motors has two flat surfaces parallel to each other, and the two motors are joined to each other with a flat surface of one motor in contact with a flat surface of the other.

6. The method for manufacturing the mirror surface adjustment actuator according to Claim 4 or Claim 5 comprising:
a single axis motors joining step of joining the two single axis motors to each other;
a single axis motors grasping step of grasping the two single axis motors joined to each other in the single axis motors joining step, with a robot hand; and
a single axis motors mounting step of mounting a couple of the joined single axis motors in the housing, with the robot hand.

7. A method for manufacturing the mirror surface adjustment actuator according to Claim 5 comprising:
a single axis motors joining step of joining the two single axis motors to each other with a flat surface of one motor in contact with a flat surface of the other;
a single axis motors grasping step of grasping a flat surface of one motor body and a flat surface of the other motor body, which are not in contact with each other, of the two single axis motors joined to each other in the single axis motors joining step, with a robot hand; and
a single axis motors mounting step of mounting a couple of the joined single axis motors in the direction in which the flat surfaces are perpendicular to the housing, with the robot hand.
